# EUROPEAN PATENT SPECIFICATION

(11) **EP 2 882 579 B1**
(45) Date of publication and mention of the grant of the patent: **16.05.2018**
(21) Application number: 13820159.5
(22) Date of filing: 16.07.2013
(51) Int. Cl.: B29C 45/00, B60R 13/02, F16B 5/06

(54) **VEHICLE PANEL PORTION DESIGNED TO AVOID INDENTATIONS**
FAHRZEUGPLATTENTEIL ZUR VERMEIDUNG VON VERTIEFUNGEN
PARTIE DE TABLEAU DE VÉHICULE CONÇUE DE MANIÈRE À ÉVITER LES INDENTATIONS

(30) Priority: 18.07.2012 SE 1250876
(43) Date of publication of application: 17.06.2015
(73) Proprietor: Scania CV AB, 151 87 Södertälje (SE)
(72) Inventor: JERPDAL, Lars, SE-749 62 Örsundsbro (SE); THYRÉN, Sebastian, SE-117 39 Stockholm (SE); KIKKERT, Rimer, NL-7091 HV Dinxperlo (NL)
(86) International application number: PCT/SE2013/050909
(87) International publication number: WO 2014/014403

(56) References cited:
- EP-A1- 1 386 713
- WO-A1-2013/041367
- JP-A- H0 550 474
- JP-A- H03 207 617
- JP-A- H07 117 057
- JP-A- H07 117 057
- JP-A- H07 276 445
- JP-A- H07 276 445
- JP-A- S59 187 813
- JP-A- 2009 029 252
- US-A- 5 552 970
- US-A- 6 068 896
- US-A1- 2002 043 041
- US-A1- 2002 043 041
- US-A1- 2007 107 174
- US-A1- 2007 107 174
- US-A1- 2009 246 471
- US-A1- 2009 246 471
- US-A1- 2012 014 766
- US-A1- 2012 014 766
- BEITZ: "Dubbel - Taschenbuch für den Maschinenbau, 17. Auflage", DUBBEL TASCHENBUCH FUER DEN MASCHINENBAU, XX, XX, 1 January 1990 (1990-01-01), page 70, XP002321452,
- Anonymous: "Design Guidelines - Uniform Wall Thickness in Rapid Injection Molding - Protomold", Design Guidelines - Uniform Wall Thickness in Rapid Injection Molding - Protomold, 25 March 2010 (2010-03-25), pages 1-2, XP055189043, US Retrieved from the Internet: URL:http://web.archive.org/web/20100325224 445/http://www.protomold.com/DesignGuideli nes_UniformWallThickness.aspx [retrieved on 2015-05-13]
- ROSATO D V ET AL: "INJECTION MOLDING HANDBOOK, PASSAGE", INJECTION MOLDING HANDBOOK, XX, XX, 1 January 1995 (1995-01-01), pages 595-598, XP002912395,
- BOUWS T: "ONTWERPRICHTLIJNEN VOOR SPUITGIETPRODUKTEN", KUNSTSTOF EN RUBBER, WYT EN ZONEN UITGEVERS. ROTTERDAM, NL, vol. 44, no. 6, 1 June 1991 (1991-06-01), pages 23-27, XP000236825, ISSN: 0167-9597
- BRYCE ET AL: "product design considerations", PLASTIC INJECTION MOLDING MATERIAL SELECTION AND PRODUCT DESIGNFUNDAMENTALS, SOCIETY OF MANUFACTURING ENGINEERS, US, 1 January 1972 (1972-01-01), pages 256-258, XP002321451,
- BRANNAN, M.H. ET AL.: 'Sink mark prevention feature for injection molded plastic parts' IP.COM JOURNAL 17 June 2002, XP013003472
- GRUBER, D.P. ET AL.: 'Novel approach to the measurement of the visual perceptibility of sink marks on injection molding parts' POLYMER TESTING vol. 30, no. 6, September 2011, pages 651 - 656, XP028380168
- 'Protomold' INTERNET CITATION 25 March 2010, XP055189043 Retrieved from the Internet: <URL:http://web.archive.org/web/20100325224 445/http://www.proto mold.com/DesignGuidelines_UniformWallThickn ess.aspx> [retrieved on 2013-02-07]
- BRUDER, U.: 'Värt att veta om plast' PRINTFABRIKEN AB, 2011, page 133, 173, XP008176291

## Description

### TECHNICAL FIELD

The invention relates to a panel portion according to the preamble of claim 1.

### BACKGROUND

Vehicles are often fitted with exterior thermoplastic panels made in an injection moulding process. Cases where the edges of the panels cannot be used for fastening require the incorporation during panel manufacture of fastening configurations which constitute an integral part of the panel and are situated on its rear side. Such exterior panels may be subject to relatively large stresses calling for fastening configurations which provide the panel with good strength.

A known variant of such fastening configurations is a so-called kennel comprising opposite sidewalls, a rear wall running between said sidewalls, a roof between the sidewalls, and an aperture opposite to said rear wall. Such a fastening configuration results in good durability and strength of the panel.

A problem is that such fastening configurations on the rear side of such a panel often become visible on the front side of the panel in the form of small but visible variations/depressions on the surface which are regarded as inappropriate for a class A surface in that they detract from the impression of quality.

One way of improving the impression of quality is to incorporate in the cavity of the moulding tool a recurring rough pattern which conceals the indentation.

In US 2002/043041 A1 a fastening configuration having the shape of a so-called kennel is disclosed. In this document the problem of visible variations/depressions on the panel surface mentioned and partly solved by adjustment of a wall thickness.

In BEITZ: "Dubbel-Taschenbuch für den Maschinenbau, 17. Auflage", DUBBEL TASCHENBUCH FUER DEN MASCHINENBAU, XX, XX, 1 January 1990 (1990-01-01), page 70, XP002321452, it is described that different values of the ratio of the wall thickness on different parts of the kennel can be used to avoid sink marks.

Rosato D V et. Al: "Injection moulding handbook, Passage", Injection moulding handbook, XX, XX, 1 January 1995, (1995-01-01), pages 595-598, XP002912395 presents different solutions to material flow problems during injection molding processes.

### OBJECT OF THE INVENTION

An object of the present invention is to propose a panel made of thermoplastic in an injection moulding process whereby its interior surface comprises at least one fastening configuration which is durable and rigid and making possible a glossy surface structure on its exterior surface to give the impression of good quality.

### SUMMARY OF THE INVENTION

These and other objects indicated by the description set out below are achieved by a panel portion of the kind indicated in the introduction which further presents the features indicated in the characterising part of the attached independent claim 1. Preferred embodiments of the panel portion are defined in the attached dependent claims.

The invention achieves the objects with a panel portion intended to be made in an injection moulding process, comprising a platelike portion with an exterior surface and an opposite interior surface, which interior surface is provided with at least one fastening configuration, a so-called kennel, comprising opposite sidewalls, a rear wall running between said sidewalls, a roof running between the sidewalls, and an aperture opposite to said rear wall, the ratio between the thickness of the material of said platelike portion and that of said sidewalls along said interior surface being in the range of about 2.8 to about 3. This ratio minimises the effect of indentations on the exterior side of the panel portion while at the same time the fastening configuration in kennel form results in good durability of the panel portion's fastening configuration, making possible a glossy exterior surface giving the impression of good quality.

When said ratio is in the range of about 2.8 to about 3, the result is optimum minimisation of depressions on the exterior side and durability of the panel portion's fastening configuration.

Further, the respective ends of said sidewalls at said aperture are arranged to slope towards said rear wall. Manufacture is thus facilitated in that the filling round the hollow space is easier in that for the manufacture there is a slope on the block used to form the aperture in the fastening configuration, which means that the moulding acquires a better transition in that the change in direction of the material takes place over a longer distance with a less sharp bend causing the material to orientate itself in a more advantageous way when the cooling process begins. The more favourable orientation of the material helps to reduce the depression and makes the fastening configuration, and hence the panel portion, more stable.

Additionally, said rear wall of said panel portion comprises a recess along said interior surface, resulting in optimum minimisation of depressions on the exterior side and durability of the panel portion's fastening configuration. The recess is thereby so situated that portions of the rear wall run on the respective sides of the recess. In one embodiment of said panel portion said sidewalls comprise a portion with less wall thickness along said interior surface than that of the rest of the sidewalls. This smaller material thickness along the interior surface minimises the effects of indentations on the panel portion's exterior side while at the same time the greater material thickness of the fastening configuration in kennel form results in good durability of the panel portion's fastening configuration.

In one embodiment of said panel portion, the ratio between the wall thickness of the sidewalls and that along said interior surface is in the range of about 1.3 to about 2.4, resulting in optimum minimisation of depressions on the exterior side and durability of the panel portion's fastening configuration.

In one embodiment of said panel portion said rear wall is arranged to slope towards said aperture. Manufacture is thus facilitated in that the filling round the hollow space is easier in that for the manufacture there is a slope of the block used to form the aperture in the fastening configuration which means that the moulding acquires a better transition in that the change in direction of the material takes place over a longer distance with a less sharp bend causing the material to orientate itself in a more advantageous way when the cooling process begins. The more favourable orientation of the material helps to reduce the depression and makes the fastening configuration, and hence the panel portion, more stable.

In one embodiment of said panel portion said aperture in the fastening configuration faces in a direction which forms a specified angle, preferably about 0 degrees to about 20 degrees, relative to and opposite to the direction of material supply in said injection moulding process. Manufacture is thus facilitated in that the filling round the hollow space is easier, causing the material to orientate itself in a more advantageous way when the cooling process begins. The more favourable orientation of the material helps to reduce the depression.

The material thickness of said platelike portion is in the range of about 2 mm to about 5 mm, the interior height of said fastening configuration about 7.5 mm to about 40 mm, the material thickness of said roof and rear wall and the thicker portions of said sidewalls 1.5 mm to about 3 mm, the material thickness of the thinner portions of said sidewalls 0.8 mm to 2.2 mm, the height from said interior surface of the thinner portions of said sidewalls about 2 mm to about 4 mm and the width of said fastening configuration across said sidewalls about 15 mm to about 50 mm. The minimisation of depressions on the exterior side and the durability of the panel portion's fastening configuration are thus optimised.

In one embodiment the panel portion is made of thermoplastic material, making it possible to achieve efficient manufacture, minimisation of depressions and good durability characteristics.

In one embodiment of said panel portion said thermoplastic material is based on polyester material and mixtures of such, thereby minimising depressions and achieving good durability characteristics and good rigidity.

In one embodiment of said panel portion said exterior surface of said platelike portion is high-gloss, resulting in an impression of good quality.

### DESCRIPTION OF DRAWINGS

The present invention will be better understood by reading the detailed description set out below in conjunction with the attached drawings, in which the same reference notations are used for similar items throughout the various views,
Fig. 1 is a schematic perspective view of a panel portion according to an embodiment of the present invention,
Fig. 2 is a schematic cross-section of the panel portion in Fig. 1,
Fig. 3 is a schematic front view of the panel portion in Fig. 1,
Fig. 4 is a schematic rear view of the panel portion in Fig. 1,
Fig. 5 is a schematic plan view of the panel portion's interior side, and
Fig. 6 is a schematic side view of part of a tool for making the panel portion in Fig. 1.

### DESCRIPTION OF EMBODIMENTS

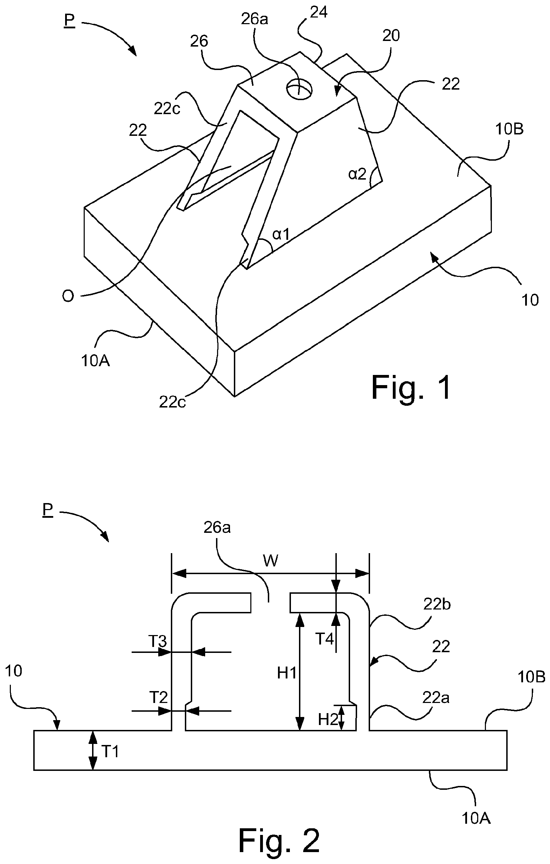

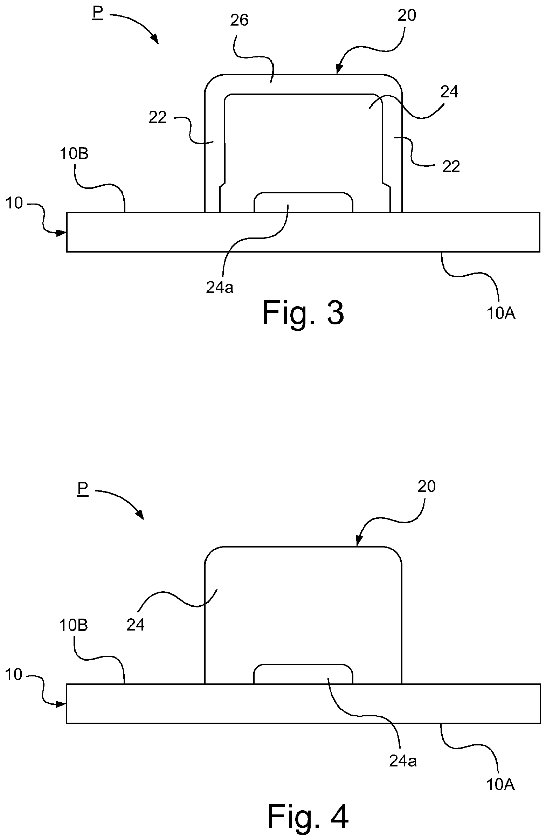

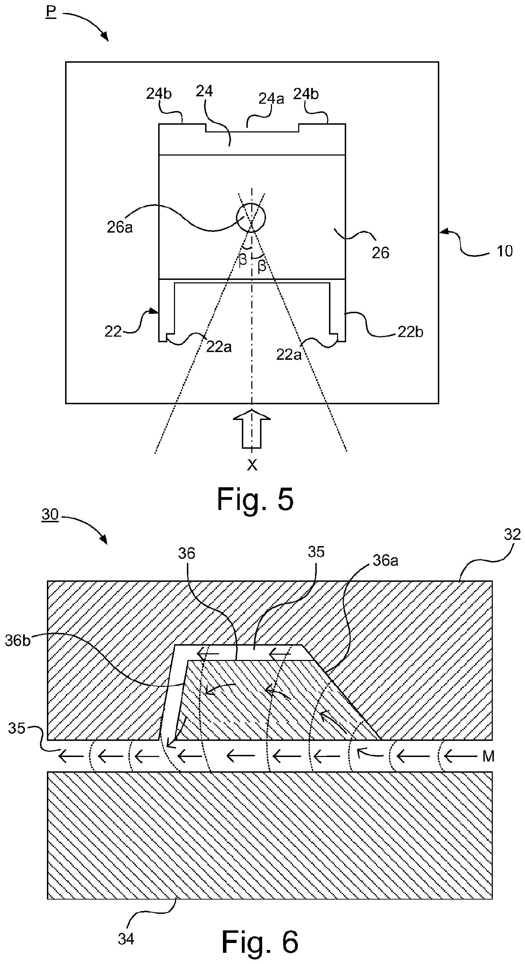

Fig. 1 illustrates schematically a perspective view of a panel portion P according to an embodiment of the present invention, Fig. 2 a cross-section of the panel portion P in Fig. 1, Fig. 3 a front view of the panel portion P in Fig. 1, Fig. 4 a rear view of the panel portion P in Fig. 1, and Fig. 5 a plan view of the panel portion's interior side.

The panel portion P comprises a platelike portion 10 with an exterior surface 10A, a so-called A surface, and a corresponding interior surface 10B, a so-called B surface. The interior surface 10B is provided with a fastening configuration 20 in the form of a so-called kennel, i.e. having substantially the shape of a kennel.

The panel portion P is intended to be made in an injection moulding process. It is made of thermoplastic material which in one embodiment is based on polycarbonate material and mixtures of such or polyester material and mixtures of such. This minimises depressions on the panel portion's exterior surface 10A and achieves good durability characteristics and good rigidity of the panel portion.

In one embodiment of said panel portion P said exterior surface 10A of said platelike portion 10 is high-gloss, resulting in an impression of good quality.

The panel portion's fastening configuration 20 comprises sidewalls 22 situated opposite to and at a distance from one another. Said sidewalls in one embodiment are arranged to run parallel relative to one another. In a variant they are arranged to run at an angle of up to 45 degrees relative to one another. The fastening configuration further comprises a rear wall 24 running between said sidewalls. It also comprises a roof 26 running between the sidewalls. It has an aperture O opposite to said rear wall.

Said sidewalls 22 and the roof and rear wall running between them form a space. Said roof has in one embodiment an aperture 26a running through it to accommodate a fastening element, e.g. a threaded connection.

Said fastening configuration 20 in kennel form is adapted to accommodating fastening means, e.g. metal clips, in order to fasten the panel portion at desired locations, e.g. on the outside of a vehicle.

Said platelike portion 10 of the panel portion has a material thickness T1. Said sidewalls 22 of the panel portion's fastening configuration have a material thickness T2 along the interior surface 10B of the platelike portion.

The ratio T1/T2 between the material thickness of said platelike portion and that of said sidewalls along said interior surface 10B is in the range of about 2.8 to about 3. In one embodiment the ratio T1/T2 is about 2.9. This results in good strength of fastening configuration while at the same time reducing depressions on the exterior side.

Said sidewalls 22 of the fastening configuration are arranged to run at a distance from one another, substantially at right angles to said interior surface 10B. They have a thinner portion 22a running along said interior surface 10B, and a thicker portion 22b running from said thinner portion. Said thinner portion is arranged to run from said interior surface 10B and lead to said thicker portion.

Said thinner portion 22a of the sidewalls has, as previously mentioned, the wall thickness T2, and said thicker portion 22b the wall thickness T3. The ratio T3/T2 between the thickness of the thicker portion 22b of the sidewalls and that of said thinner portion 22a along said interior surface 10B is in the range of about 1.3 to about 2.4. This results in good strength of the fastening configuration 20 while at the same time reducing depressions on the exterior surface 10A.

Said sidewalls 22 have a height H1, i.e. the panel portion P has an interior height H1. Said thinner portion of said sidewalls has a height H2. Said fastening configuration 20 has a width W, i.e. a distance W between the outsides of the sidewalls.

The respective ends 22c of said sidewalls at said aperture O are arranged to slope towards said rear wall 24. Each end 22c of the sidewalls and the lower part of said sidewalls which runs along the interior surface 10B of the platelike portion consequently form an acute angle α1.

Said rear wall 24 is arranged to slope towards said aperture O. Said rear wall and the lower part of said sidewalls which runs along the interior surface 10B of the platelike portion consequently form an acute angle α2.

Said slope of the respective ends 22c of the sidewalls and said slope of the rear wall 24 facilitate manufacture by making it easier to achieve filling round the hollow space.

Said rear wall 24 has a recess 24a along said interior surface, resulting in optimised minimisation of depressions on the exterior side 10A, where no depressions at all occur at the recess, through the portions of the rear wall which run on the respective sides of the recess along the interior surface 10B.

Fig. 6 is a schematic side view of part of a tool 30 for making the panel portion P in Fig. 1. The tool comprises a moulding cavity 35 formed of two tool halves 32, 34. It further comprises a block 36 in the form of a metal item for creating said aperture O and space in the fastening configuration 20.

The block has a sloping hillside-like front portion 36a and a sloping rear portion 36b for achieving said slopes.

The fact that for the manufacture the block 36 has such slopes to create the aperture O and the space in the fastening configuration causes the moulding to have a better transition in that the change of direction of the material M takes place over a longer distance with a less sharp bend causing the material M to orientate itself in a more advantageous way when the cooling process begins.

The more favourable orientation of the material M helps to reduce the depression and results in greater stability of the fastening configuration 20 and consequently of the panel portion P.

As depicted in Fig. 5, said aperture in the fastening configuration faces in a direction which forms a specified angle, preferably between 0 degrees and about 20 degrees, relative to and opposite to the material supply direction X, i.e. the direction of movement of the injected material M according to Fig. 6, in said injection moulding process.

Said aperture O in the fastening configuration faces preferably in a direction which forms an angle of substantially 0 degrees relative to and opposite to the material supply direction X in said injection moulding process.

Said sidewalls 22 consequently run in the material supply direction X, facilitating manufacture by making it easier to achieve filling round the hollow space so that the material M will orientate itself in a more advantageous way when the cooling process begins. The more favourable orientation of the material M helps to reduce the depression and results in greater stability of the fastening configuration and consequently of the panel portion P.

In one embodiment of said panel portion P the material thickness T1 of said platelike portion 10 is in the range of about 2 mm to about 5 mm.

In one embodiment of said panel portion P the interior height H1 of said fastening configuration 20 is in the range of about 7.5 mm to about 40 mm. In one embodiment of said panel portion the width W of said fastening configuration 20 across said sidewalls 22 is in the range of about 15 mm to about 50 mm.

In one embodiment of said panel portion the material thickness T2 of the thinner portions 22a of said sidewalls is in the range of 0.8 mm to 2.2 mm.

In one embodiment of said panel portion the material thickness T3 of the thicker portions 22b of said sidewalls is in the range of 1.5 mm to about 3 mm.

In one embodiment of said panel portion the height H2 from said interior surface 10B of the thinner portions 22b of said sidewalls is in the range of about 2 mm to about 4 mm.

In one embodiment of said panel portion the material thickness T4 of said roof 26 is in the range of about 1.5 mm to about 3 mm.

In one embodiment of said panel portion the material thickness of said rear wall 24 is in the range of about 1.5 mm to about 3 mm.

A panel portion P has been regarded above as being made in an injection moulding process, comprising a platelike portion 10 with an exterior surface and a corresponding interior surface 10B, which interior surface comprises a fastening configuration 20, a so-called kennel, the ratio between the material thickness of said platelike portion 10 and that of the sidewalls of the kennel along said interior surface 10B being in the range of about 2.8 to about 3. The panel portion P comprises in one variant more than one such fastening configuration. It may comprise any desired number of fastening configurations which may each be formed differently, i.e. differing in height, width, material thickness etc. The panel portion may have any suitable shape, e.g. the exterior surface may be substantially planar, comprise curvatures etc. Said platelike portion 10 in one variant is substantially planar. Said platelike portion is one variant has curvature.

The panel portion according to the present invention may with advantage be used as an external panel, e.g. on vehicles where panels which are rigid, durable and have aesthetically pleasing outside surfaces giving an impression of high quality, and high-gloss surfaces, are desirable, e.g. outside panels for air deflectors in the form of spoilers or the like.

The above description of preferred embodiments of the present invention is provided for illustrative and description purposes. It is not intended to be exhaustive, nor to restrict the invention to the variants described. Many modifications and variations will obviously suggest themselves to one skilled in the art, within the scope of the invention as defined by the appended claims. The embodiments have been chosen and described to best explain the principles of the invention and their practical applications, and thereby enable one skilled in the art to understand the invention for different embodiments and with the various modifications appropriate to the intended use.

## Claims

1. A panel portion (P) for vehicles, intended to be made in an injection moulding process, comprising a platelike portion (10) with an exterior surface (10A) and a corresponding interior surface (10B), which interior surface is provided with at least one fastening configuration (20), a so-called kennel, comprising opposite sidewalls (22), a rear wall (24) running between said sidewalls, a roof (26) running between the sidewalls, and an aperture (O) opposite to said rear wall (24), **characterised in that** the ratio (T1/T2) between the material thickness (T1) of said platelike portion (10) and the material thickness (T2) of said sidewalls (22) along said interior surface (10B) is in the range of about 2.8 to about 3, said rear wall (24) comprise a recess (24a) situated along said interior surface (10B) through said rear wall (24), such that said rear wall (24) have portions (24b) which run on the respective sides of the recess (24a) along the interior surface (10B) and the respective ends (22c) of said sidewalls (22) at said aperture (O) are arranged to slope towards said rear wall (24) .

2. A panel portion for vehicles according to claim 1, in which said sidewalls (22) comprise a thinner portion (22a) with less wall thickness (T2) along said interior surface (10B) than the rest of the sidewalls (22).

3. A panel portion for vehicles according to claim 2, in which said sidewalls comprises a thicker portion (22b) running from said thinner portion (22a) having a thicker wall thickness (T3), wherein the ratio (T3/T2) between the wall thickness (T3) of the sidewalls (22) and the wall thickness (T2) along said interior surface (10B) is in the range of about 1.3 to about 2.4.

4. A panel portion for vehicles according to any one of claims 1-3, in which said rear wall (24) is arranged to slope towards said aperture (O).

5. A panel portion for vehicles according to any one of claims 1-4, in which said aperture (O) in the fastening configuration (20) faces in a direction which forms a specified angle (β), preferably about 0 degrees to about 30 degrees, relative to and opposite to the direction of material supply in said injection moulding process.

6. A panel portion for vehicles, according to any one of claims 1-5, in which the material thickness (T1) of said platelike portion (10) is in the range of about 2 mm to about 5 mm, the interior height (H1) of said fastening configuration (20) in the range of about 7.5 mm to about 40 mm, the material thickness (T3) of said roof (26) and rear wall (24) and the thicker portions (22b) of said sidewalls in the range of 1.5 mm to about 3 mm, the material thickness (T2) of the thinner portions (22a) of said sidewalls in the range of 0.8 mm to 2.2 mm, the height (H2) from said interior surface (10B) of the thinner portions (22a) of said sidewalls in the range of about 2 mm to about 4 mm, and the width (W) of said fastening configuration (20) across said sidewalls (22) in the range of about 15 mm to about 50 mm.

7. A panel portion for vehicles, according to any one of claims 1-6, in which the panel portion (P) is made of thermoplastic material.

8. A panel portion for vehicles according to claim 7, in which said thermoplastic material is based on polycarbonate material and mixtures of such.

9. A panel portion for vehicles, according to any one of claims 1-8, in which said exterior surface (10A) of said platelike portion (10) is arranged to be high-gloss.

## Patentansprüche

1. Beplankungsabschnitt (P) für Fahrzeuge, der in einem Spritzgießprozess hergestellt werden soll, der einen plattenartigen Abschnitt (10) mit einer äußeren Oberfläche (10A) und einer entsprechenden inneren Oberfläche (10B) aufweist, wobei die innere Oberfläche mit mindestens einer Befestigungskonstruktion (20), einem sogenannten Kännel, versehen ist, die gegenüberliegende Seitenwände (22), eine zwischen den Seitenwänden verlaufende Rückwand (24), ein zwischen den Seitenwänden verlaufendes Dach (26) und eine Öffnung (O) gegenüber der Rückwand (24) aufweist,
**dadurch gekennzeichnet, dass** das Verhältnis (T1/T2) zwischen der Materialdicke (T1) des plattenartigen Abschnitts (10) und der Materialdicke (T2) der Seitenwände (22) entlang der inneren Oberfläche (10B) im Bereich von ca. 2,8 bis ca. 3 liegt, wobei die Rückwand (24) eine Aussparung (24a) aufweist, die sich entlang der inneren Oberfläche (10B) durch die Rückwand (24) erstreckt, so dass die Rückwand (24) Abschnitte (24b) hat, die auf den jeweiligen Seiten der Aussparung (24a) entlang der inneren Oberfläche (24) verlaufen und die jeweiligen Enden (22c) der Seitenwände (22) an der Öffnung (O) zur Rückwand (24) geneigt sind.

2. Beplankungsabschnitt für Fahrzeuge nach Anspruch 1, wobei die Seitenwände (22) einen dünneren Abschnitt (22a) mit einer kleineren Wanddicke (T2) entlang der inneren Oberfläche (10B) aufweisen als der Rest der Seitenwände (22).

3. Beplankungsabschnitt für Fahrzeuge nach Anspruch 2, wobei die Seitenwände einen dickeren Abschnitt (22b) aufweisen, der sich vom dünneren Abschnitt (22a) aus mit einer größeren Wanddicke (T3) erstreckt, wobei das Verhältnis (T3/T2) zwischen der Wanddicke (T3) der Seitenwände (22) und der Wanddicke (T2) entlang der inneren Oberfläche (10B) im Bereich von ca. 1,3 bis ca. 2,4 liegt.

4. Beplankungsabschnitt für Fahrzeuge nach einem der Ansprüche 1 bis 3, wobei die Rückwand (24) so angeordnet ist, dass sie zur Öffnung (O) geneigt ist.

5. Beplankungsabschnitt für Fahrzeuge nach einem der Ansprüche 1 bis 4, wobei die Öffnung (O) in der Befestigungskonstruktion (20) in eine Richtung weist, die einen vorgegebenen Winkel (β), vorzugsweise von ca. 0° bis ca. 30°, relativ und entgegengesetzt zur Richtung der Materialzufuhr im Spritzgießprozess bildet.

6. Beplankungsabschnitt für Fahrzeuge nach einem der Ansprüche 1 bis 5, wobei die Materialdicke (T1) des plattenartigen Abschnitts (10) im Bereich von ca. 2 mm bis ca. 5 mm, die Innenhöhe (H1) der Befestigungskonstruktion (20) im Bereich von ca. 7,5 mm bis ca. 40 mm, die Materialdicke (T3) des Daches (26), der Rückwand (24) und der dickeren Abschnitte (22b) der Seitenwände im Bereich von 1,5 mm bis ca. 3 mm, die Materialdicke (T2) der dünneren Abschnitte (22a) der Seitenwände im Bereich von 0,8 mm bis 2,2 mm, die Höhe (H2) von der Innenoberfläche (10B) der dünneren Abschnitte (22a) der Seitenwände im Bereich von ca. 2 mm bis ca. 4 mm und die Breite (W) der Befestigungskonstruktion (20) über die Seitenwände (22) im Bereich von ca. 15 mm bis ca. 50 mm liegt.

7. Beplankungsabschnitt für Fahrzeuge nach einem der Ansprüche 1 bis 6, wobei der Beplankungsabschnitt (P) aus einem thermoplastischen Material besteht.

8. Beplankungsabschnitt für Fahrzeuge nach Anspruch 7, wobei das thermoplastische Material auf Polycarbonatmaterial und Polycarbonat-Gemischen basiert.

9. Beplankungsabschnitt für Fahrzeuge nach einem der Ansprüche 1 bis 8, wobei die äußere Oberfläche (10A) des plattenartigen Abschnitts (10) hochgänzend ausgeführt ist.

## Revendications

1. Partie de tableau (P) pour véhicules, destinée à être réalisée lors d'un procédé de moulage par injection, comprenant une partie de type plaque (10) ayant une surface extérieure (10A) et une surface intérieure (10B) correspondante, laquelle surface intérieure est munie d'au moins un moyen de fixation (20), appelée niche, comprenant des parois latérales opposées (22), une paroi arrière (24) s'étendant entre lesdites parois latérales, un toit (26) s'étendant entre les parois latérales, et une ouverture (O) opposée à ladite paroi arrière (24), **caractérisée en ce que** le rapport (T1/T2) entre l'épaisseur de matériau (T1) de ladite partie de type plaque (10) et l'épaisseur de matériau (T2) desdites parois latérales (22) le long de ladite surface intérieure (10B) est dans la plage d'environ 2,8 à environ 3, ladite paroi arrière (24) comprend un évidement (24a) situé le long de ladite surface intérieure (10B) traversant ladite paroi arrière (24), de sorte que ladite paroi arrière (24) a des parties (24b) qui s'étendent sur les côtés respectifs de l'évidement (24a) le long de la surface intérieure (10B), et les extrémités respectives (22c) desdites parois latérales (22) au niveau de ladite ouverture (O) sont agencées pour être inclinées vers ladite paroi arrière (24).

2. Partie de tableau pour véhicules selon la revendication 1, dans laquelle lesdites parois latérales (22) comprennent une partie plus mince (22a) ayant une épaisseur de paroi inférieure (T2) le long de ladite surface intérieure (10B) que le reste des parois latérales (22).

3. Partie de tableau pour véhicules selon la revendication 2, dans laquelle lesdites parois latérales comprennent une partie plus épaisse (22b) s'étendant à partir de ladite partie plus mince (22a), ayant une épaisseur de paroi plus épaisse (T3), le rapport (T3/T2) entre l'épaisseur de paroi (T3) des parois latérales (22) et l'épaisseur de paroi (T2) le long de ladite surface intérieure (10B) étant dans la plage d'environ 1,3 à environ 2,4.

4. Partie de tableau pour véhicules selon l'une quelconque des revendications 1 à 3, dans laquelle ladite paroi arrière (24) est agencée pour être inclinée vers ladite ouverture (O).

5. Partie de tableau pour véhicules selon l'une quelconque des revendications 1 à 4, dans laquelle ladite ouverture (O) dans le moyen de fixation (20) est orientée dans une direction qui forme un angle spécifié (β), de préférence d'environ 0 degré à environ 30 degrés, par rapport à la direction d'alimentation en matériau dudit procédé de moulage par injection, et dans le sens opposé à celle-ci.

6. Partie de tableau pour véhicules, selon l'une quelconque des revendications 1 à 5, dans laquelle l'épaisseur de matériau (T1) de ladite partie de type plaque (10) est dans la plage d'environ 2 mm à environ 5 mm, la hauteur intérieure (H1) dudit moyen de fixation (20) est dans la plage d'environ 7,5 mm à environ 40 mm, l'épaisseur de matériau (T3) desdits toit (26) et paroi arrière (24) et des parties plus épaisses (22b) desdites parois latérales est dans la plage de 1,5 mm à environ 3 mm, l'épaisseur de matériau (T2) des parties plus minces (22a) desdites parois latérales est dans la plage de 0,8 mm à 2,2 mm, la hauteur (H2) à partir de ladite surface intérieure (10B) des parties plus minces (22a) desdites parois latérales est dans la plage d'environ 2 mm à environ 4 mm, et la largeur (W) dudit moyen de fixation (20) de l'une à l'autre desdites parois latérales (22) est dans la plage d'environ 15 mm à environ 50 mm.

7. Partie de tableau pour véhicules, selon l'une quelconque des revendications 1 à 6, dans laquelle la partie de tableau (P) est constituée de matériau thermoplastique.

8. Partie de tableau pour véhicules selon la revendication 7, dans laquelle ledit matériau thermoplastique est à base de matériau polycarbonate et de mélanges de celui-ci.

9. Partie de tableau pour véhicules, selon l'une quelconque des revendications 1 à 8, dans laquelle ladite surface extérieure (10A) de ladite partie de type plaque (10) est conçue pour être très brillante.
